# EUROPÄISCHE PATENTSCHRIFT

(11) **EP 1 989 075 B1**
(45) Veröffentlichungstag und Bekanntmachung des Hinweises auf die Patenterteilung: **03.02.2010**
(21) Anmeldenummer: 07710498.2
(22) Anmeldetag: 27.02.2007
(51) Int. Cl.: B60K 1/04

(54) **FAHRZEUG MIT ELEKTRISCHEM ANTRIEB**
ELECTRICALLY-PROPELLED VEHICLE
VÉHICULE AUTOMOBILE À PROPULSION ÉLECTRIQUE

(30) Priorität: 27.02.2006 AT 1442006
(43) Veröffentlichungstag der Anmeldung: 12.11.2008
(73) Patentinhaber: Magna Steyr Fahrzeugtechnik AG & Co. KG, 8041 Graz (AT)
(72) Erfinder: GUSS, Walter, A-8071 Gössendorf (AT); FOIDL, Helmut, A-8010 Graz (AT)
(74) Vertreter: Harringer, Thomas
(86) Internationale Anmeldenummer: PCT/AT2007/000099
(87) Internationale Veröffentlichungsnummer: WO 2007/095663

(56) Entgegenhaltungen:
- WO-A1-2005/084985
- DE-A1- 10 132 191
- US-A- 4 058 182

## Beschreibung

Die Erfindung betrifft Fahrzeuge mit elektrischem Antrieb, deren Batterie von einem Batteriekasten aufgenommen ist, der im Heck des Fahrzeuges und unter dessen Boden angeordnet ist. Das können sowohl Fahrzeuge mit rein elektrischem als auch mit Hybrid-elektrischem Antrieb (Verbrennungskraftmaschine und elektrische Maschine, die auch als Generator arbeiten kann) sein. Beide haben Akkumulatorenbatterien (kurz: Batterien), die erheblich größer und schwerer als die in Kraftfahrzeug mit Antrieb nur durch eine Verbrennungskraftmaschine sind.

Derartige Batterien nehmen viel Bauraum in Anspruch, ihre Masse kann im Kollisionsfall durch ihre Wucht die Passagiere gefährden und ihr Inhalt ist oft chemisch aggressiv, sodass sie auch vor Beschädigung geschützt sein müssen. Ausserdem brauchen die verwendeten Hochleistungsbatterien meist eine umfangreiche Hilfsapparatur (Ventilatoren, Kühlmittelpumpen und Elektronik), die Geräusch verursacht und für Wartungszwecke zugänglich sein muss. Weiters soll der Kofferraum des Fahrzeuges möglichst wenig beschränkt sein und einen ebenen Ladeboden haben.

Ein gattungsgemäßes Fahrzeug ist aus der DE 25 22 844 bekannt. Die Batterie ist dort in einem Trog untergebracht, der vor der Hinterachse unter dem geschlossenen Bodenblech mittels Flanschen aufgehängt ist. Der vordere Flansch hängt in einer Winkelschiene, die an einem schräg vorwärts-abwärts verlaufenden Abschnitt der Längsschweller so angeschweisst ist, dass sie eine Sollbruchstelle bildet. Dadurch wird der Trog im Fall einer Frontalkollision mit seiner vorderen Kante abwärts gestoßen und so vom Innenraum des Fahrzeuges abgelenkt. Gegen eine Heckkollision (eine Auffahrkollision, bei der das Fahrzeug von hinten angefahren wird) ist die Batterie jedoch nicht geschützt. Aus Dokument WO 2005/084 985 ist ein Fahrzeug bekannt, das Merkmale des Oberbegriffs des Anspruchs 1 beinhaltet.

Es ist daher Aufgabe der Erfindung, die Batterie in einem gattungsgemäßen Fahrzeug so unterzubringen und zu befestigen, dass sie sowohl gegen Frontalals auch gegen Heckkollisionen geschützt ist, und obendrein den Laderaum möglichst wenig einschränkt und zugänglich ist.

Zwar ist es aus der DE 10 2004 023 754 A1 bekannt, eine im Inneren des Fahrzeuges angeordnete Batterie über eine Knautschzone und einen Bewegungskonverter bei Kollisionen von hinten zu schützen. Der Bewegungskonverter ist ein Keil, der das hintere Ende der Batterie im Kollisionsfall aufwärts stößt. Das jedoch stellt auch bei Batterien normaler Größe eine Gefährdung der Passagiere dar.

Erfindungsgemäß wird das dadurch erreicht, dass der Boden (genauer: das Bodenblech) einen Ausschnitt hat, der in Draufsicht größer als der Umriss des Batteriekastens ist, dass der Ausschnitt einen verstärkten Rand hat, an dem vorne und hinten abwärts gerichtete Tragteile für den Batteriekasten befestigt sind, dass der hintere Tragteil über ein Paar Flansche mit rückwärts-abwärts schrägen Anlaufflächen am Boden des Fahrzeuges befestigt ist, und dass der Batteriekasten steif beziehungsweise versteift ist.

Bei einer Heckkollision wird der Batteriekasten nach vorne und gleichzeitig dessen hintere Kante dank der schrägen Anlaufflächen abwärts gestoßen, sodass der Batteriekasten um die vorderen Tragteile abwärts schwenkt. So kann er nicht ins Innere des Fahrzeuges eindringen, bleibt aber trotzdem mit dem Fahrzeug verbunden. Dank dieses Mechanismus kann die Batterie auch sicher hinter der Hinterachse untergebracht sein. Die Verstärkung des Bodenbleches gleicht die Schwächung des Bodenbleches durch den Ausschnitt aus und bietet den Tragteilen Halt. Dank des Ausschnittes ist die Batterie für die Wartung auch von oben zugänglich. Weil die Tragteile die Unterbringung des Batteriekasten auch mit einem gewissen Abstand unter dem Bodenblech erlauben, bleibt der Boden des Kofferraumes weitgehend eben. Der steif ausgebildete Batteriekasten schützt die Batterie weitgehend vor Beschädigungen und bewirkt über die Tragteile nach Verschraubung mit dem Bodenblech eine weitere Versteifung des Bodenbleches.

Die Flansche des hinteren Tragteiles mit den schrägen Anlaufflächen können auf verschiedene Weise miteinander verbunden sein (Anspruch 2). Vorzugsweise werden dazu Scherbolzen eingesetzt, die so dimensioniert sind, dass sie erst bei einer definierten Stoßkraft Abscheren und das aneinander Abgleiten der Flansche ermöglichen, wodurch der Batteriekasten abwärts schwenkt.

In derselben Weise wirken die Tragteile, wenn die Tragarme so am Boden befestigt sind, dass sie sich bei fortschreitender Kollision vom Bodenblech lösen können (Anspruch 3). Die Befestigungsmittel sind dann auch vorzugsweise Scherbolzen, die auch bei einer Frontalkollision wirken.

In einer vorteilhaften Weiterbildung ist der vordere Tragteil (oder die vorderen Tragteile) mittels Reissbolzen an der Unterseite des verstärkten Randes befestigt und hat einen horizontalen Stützdorn, der in ein Stützblech verschiebbar eingreift (Anspruch 4). Die Reissbolzen erlauben im Fall einer Heckkollision das Abkippen der vorderen Tragteile und ein Verschieben des Batteriekastens nach vorne, wobei der Stützdorn sicherstellt, dass die vorderen Tragteile auch nach dem Abreissen oder Abscheren der Reissbolzen mit dem Fahrzeug verbunden bleiben. Er bleibt sozusagen im Stützblech hängen. Vorzugsweise ist das Stützblech am Boden des Fahrzeuges befestigt und stützt sich über eine in Fahrtrichtung vor dem Stützdorn befindlichen Knautschzone weiter vorne am Boden des Fahrzeuges ab (Anspruch 5). Die Knautschzone kann in quer zur Fahrzeuglängsrichtung angeordneten Falten bestehen, die im Normalbetrieb versteifend wirken.

In einer vorteilhaften Weiterbildung der Erfindung ist ein Deckel des Batteriekastens an dem verstärkten Rand des Bodenbleches abnehmbar befestigt und sitzt mit seinem Rand am Batteriekasten dicht auf (Anspruch 6). So gibt der Deckel im Kollisionsfall den Verschiebeweg des Batteriekastens frei. Weil er am verstärkten Rand befestigt ist, übernimmt er auch die Abdichtung zum Innenraum des Fahrzeuges. Vorzugsweise besteht der Deckel des Batteriekastens aus Kunststoff und ist so mit dem Batteriekasten verbunden, dass er sich im Kollisionsfall von ihm löst (Anspruch 7).

Besondere Raumökonomie wird erzielt, wenn der Deckel des Batteriekastens die der Batterie zugeordnete Elektronik enthält (Anspruch 8), die so vom Inneren des Fahrzeuges aus zugänglich ist. Weiters ist es zum Schutz der Batterie und zur Körperschalldämpfung vorteilhaft, wenn die Batterie im Batteriekasten über elastische Elemente abgestützt ist (Anspruch 8).

Im folgenden wird die Erfindung anhand von Abbildungen beschrieben und erläutert. Es stellen dar:
- Fig. 1: Schematisch ein erfindungsgemäßes Kraftfahrzeug,
- Fig. 2: Detail II in Fig. 1,
- Fig. 3: Detail III in Fig. 2,
- Fig. 4: Detail IV in Fig. 2.

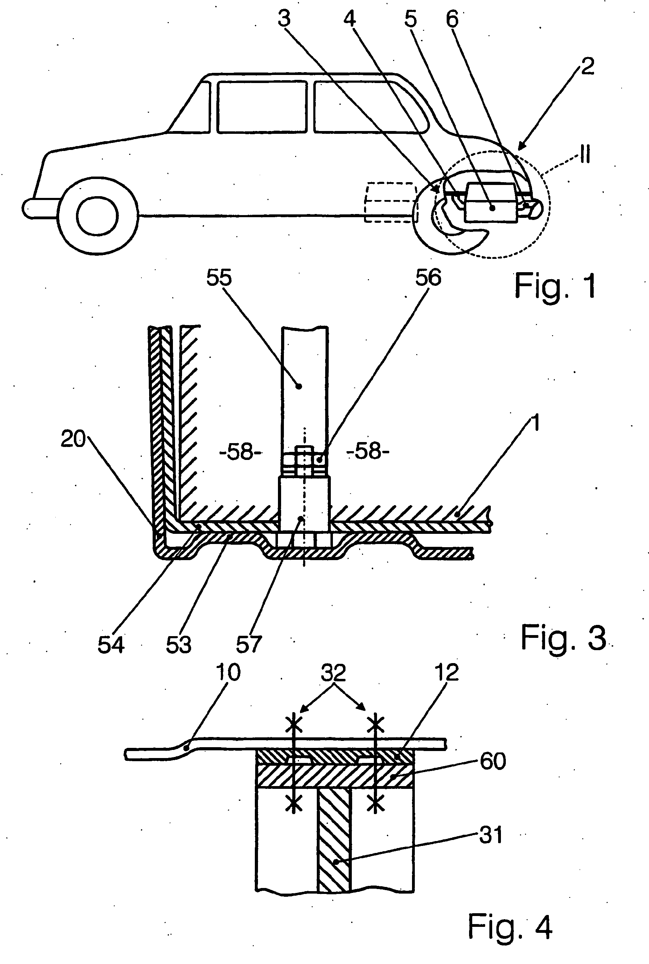

In **Fig. 1** ist ein Kraftfahrzeug mit der üblichen Gestalt angedeutet. Sein Antrieb kann rein elektromotorisch oder hybrid sein. Von Interesse ist nur dessen über den Hinterrädern 2 sichtbarer Hinterwagen 3 und der Fahrzeugboden 4 im Hinterwagen. Eine sehr große summarisch mit 5 bezeichnete Batterie ist unter dem Boden 4 und hinter den Hinterrädern 2 angeordnet. Sie könnte aber auch vor den Hinterrädern 2 angeordnet sein (gestrichelt angedeutet). Schließlich ist noch ein Stoßfängerträger 6 angedeutet. Der Teil des Fahrzeuges um die Batterie 5 ist aufgerissen und wird im folgenden näher beschrieben.

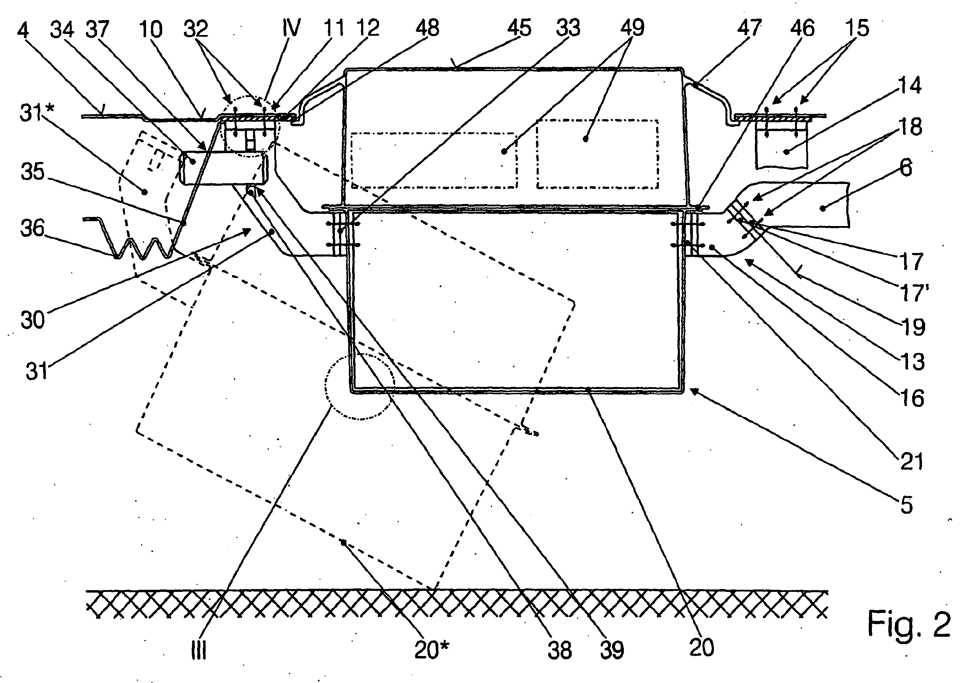

In **Fig. 2** ist der Boden 4 ein Bodenblech 10 mit einem in Draufsicht ungefähr rechteckigen Ausschnitt 11, dessen Rand einen rundum verlaufenden Verstärkungsrahmen 12 aufweist. An diesem sind hintere Tragteile 13 und vordere Tragteile 30 für einen steifen Batteriekasten 20 befestigt. Die Tragteile sind entweder einzelne Arme oder ein einziger sich über die Breite des Ausschnittes 11 erstreckender Tragteil. Der hintere Tragteil 13 (beziehungsweise die hinteren Tragteile) besteht aus einem fahrzeugfesten Teil 14, der mittels Reissbolzen 15 mit dem Verstärkungsrahmen 12 verbunden ist und auch oder alternativ mit dem Stoßfängerträger 6 verbunden sein kann, sowie aus einem batterienahen Teil 16. Die beiden Teile 14, 16 haben Flansche 17, 17' welche einander entlang einer schräg rückwärts-abwärts verlaufenden Anlauffläche berühren und mittels Scherbolzen 18 oder anderswie zusammengehalten sind.

Der Batteriekasten 20 ist mittels einer Schraubverbindung 21 fest mit dem batterienahen Teil 16 verbunden.

Die vorderen Tragteile 30 können auch wieder entweder mehrere Tragarme 31 oder ein über die ganze Breite reichender Tragarm sein. Die Tragarme 31 sind am fahrzeugnahen Ende mittels Reißbolzen 32 mit dem Verstärkungsrahmen 12 verbunden, und am batterienahen Ende mit dem Batteriekasten 20 verschraubt. Zur horizontalen Führung ist ein Stützdorn 34 vorgesehen, welcher einerseits in ein Führungsloch 37 in einem Stützblech 35 und andererseits in ein Führungsloch 39 in einem Halteblech 38 eingreift. Der Stützdorn ist in einem der beiden Löcher 37, 39 verschiebbar und in dem jeweils anderem festgemacht, etwa durch Verschweißen. Das Stützblech 35 hat eine gefaltete Knautschzone 36, das Halteblech 38 ist Teil des Tragarmes 31.

Auf dem Batteriekasten 20 sitzt ein Deckel 45. Er besteht vorzugsweise aus Kunststoff, ist leicht und sitzt auf einem rundum verlaufenden Dichtflansch 46 des Batteriekastens 20 dicht auf. Weiters hat er darüber einen ebenfalls rundum verlaufenden Kragen, dessen Saum 48 mit dem Bodenblech 10 beziehungsweise dessen Verstärkungsrahmen 12 lösbar verbunden ist. Der Saum 48 liegt entweder über oder unter dem Bodenblech 10 mit Verstärkungsrahmen 12. In ersterem Fall kann er aus dem Inneren des Fahrzeuges abgehoben werden, anderenfalls können im Deckel 45 kleinere Wartungsdeckel (nicht dargestellt) vorgesehen sein. Im Inneren des Deckels 45 befinden sich elektrische Aggregate 49, wie etwa Kühlventilatoren, Steuergeräte, elektrische Schalter etc.

Im Fall einer Heckkollision, etwa eines typischen Auffahrunfalls, wird zunächst der fahrzeugfeste Teil 14 der hinteren Tragteile 13 nach vorne gestoßen. Dabei werden die Scherbolzen 18 bei Erreichen einer bestimmten Schubkraft (entsprechend der erheblichen Steifigkeit des Batteriekastens) abgeschert und die Flansche 17, 17' können aneinander entlang der Anlauffläche 19 abgleiten. Dabei wird der batterienahe Teil 16 des Tragteiles 13 abwärts gestoßen, sodass der Batteriekasten 20 um die Verbindungsstelle des vorderen Tragarmes 31 mit dem Verstärkungsrahmen 12 abwärts schwenkt. Beim Abkippen werden die Reißbolzen 32 abgerissen (sofern der Verstärkungsrahmen 12 nicht genug nachgibt), dank des Stützdornes 34 kann der vordere Teil des Batteriekastens 20 aber nicht auf die Fahrbahn fallen. So bleibt der Batteriekasten 20 mit dem Fahrzeug verbunden und wird auf eine Weise über die Fahrbahn geschleift, die das Fahrzeug nicht beschädigt.

Nimmt die von hinten wirkende Stoßkraft weiter zu, dann wird sie von den hinteren Tragteilen 13 über den steifen Batteriekasten 20 auf die vorderen Tragarme 31 übertragen und bewirkt ein Abscheren der Reißbolzen 32, wodurch eine Vorwärts-Verschiebung der vorderen Tragteile 30 möglich wird. Dabei wirkt der Stützdorn 34 als Führung und die Knautschzone 36 des Stützbleches 35 nimmt weitere Stoßenergie auf.

Bei einer Frontalkollision, wenn also die Stoßkraft von der in Fig. 2 linken Seite kommt, werden die Reißbolzen 32 abgeschert, wirkt die Knautschzone 36 des Stützbleches 35 und die noch immer erhebliche restliche Stoßkraft wird von den vorderen Tragarmen 31 über den steifen Batteriekasten 20 zu den hinteren Tragarmen 13 geleitet, wo wieder ein Abgleiten der beiden Flansche 17, 17' ein Abwärtsschwenken des ganzen Batteriekastens 20 bewirkt.

In **Fig. 3** ist noch zu sehen, dass der Batteriekasten 20 an seinem Boden Verstärkungssicken 53 hat und dass die Batterie 58 über eine elastische Zwischenschicht 54 im Batteriekasten 20 abgestützt ist. Dabei ist die Batterie 58 mittels eines (oder mehrer) Zugbänder 55 und Schrauben 56 auf mit dem Batteriekasten 20 fest verbundene Konsolen 57 niedergespannt.

**Fig. 4** zeigt im Detail, wie der Verstärkungsrahmen 12 an der Unterseite des Bodenbleches, 10 angeordnet ist. Unter dem Verstärkungsrahmen 12 ist der Fuß 60 des Tragarmes 31 zu sehen, dieser ist mittels der Reißbolzen 32 mit der Verstärkung 12 und dem Bodenblech 10 verschraubt.

## Patentansprüche

1. Fahrzeug mit elektrischem Antrieb, dessen Batterie von einem Batteriekasten aufgenommen ist, der im Heck des Fahrzeuges und unter dessen Boden angeordnet ist, **dadurch gekennzeichnet, dass**
a) der Boden (4) einen Ausschnitt (11) hat, der in Draufsicht größer als der Umriss des Batteriekastens (20) ist,
b) der Ausschnitt (11) einen verstärkten Rand (12) hat, an dem vorne und hinten abwärts gerichtete Tragteile (13,30) für den Batteriekasten (20) befestigt sind,
c) der hintere Tragteil (13) über ein Paar Flansche (17,17') mit rückwärts-abwärts schrägen Anlaufflächen (19) am Fahrzeug befestigt ist, und
d) der Batteriekasten (20) steif beziehungsweise versteift ist.

2. Fahrzeug nach Anspruch 1, **dadurch gekennzeichnet, dass** die Flansche (17,17') mit den schrägen Anlaufflächen (19) des hinteren Tragteiles (13) mittels Scherbolzen (18) miteinander verbunden sind.

3. Fahrzeug nach Anspruch 1, **dadurch gekennzeichnet, dass** die Tragteile (13,30) so am Boden (4, 10) befestigt sind, dass sie sich im Kollisionsfall vom Bodenblech (10) lösen können.

4. Fahrzeug nach Anspruch 1, **dadurch gekennzeichnet, dass** der vordere Tragteil (30) mittels Reissbolzen (32) an der Unterseite des verstärkten Randes (12) befestigt ist und einen horizontalen Stützdorn (34) hat, der verschiebbar ist und in ein Stützblech (35) eingreift.

5. Fahrzeug nach Anspruch 4, **dadurch gekennzeichnet, dass** das Stützblech (35) am Boden (4) des Fahrzeuges befestigt ist und sich über eine in Fahrtrichtung vor dem Stützdorn (34) befindliche Knautschzone (36) am Fahrzeug abstützt.

6. Fahrzeug nach Anspruch 1, **dadurch gekennzeichnet, dass** ein Deckel (45) des Batteriekastens (20) an dem verstärkten Rand (12) abnehmbar befestigt ist und mit seinem Rand (46) am Batteriekasten (20) dicht aufsitzt.

7. Fahrzeug nach Anspruch 6, **dadurch gekennzeichnet, dass** der Deckel (45) des Batteriekastens (20) aus Kunststoff besteht und so mit dem Batteriekasten (20) verbunden ist, dass er sich im Kollisionsfall von ihm löst.

8. Fahrzeug nach Anspruch 6, **dadurch gekennzeichnet, dass** der Deckel (45) des Batteriekastens (20) die der Batterie zugeordnete Elektrik und/oder Elektronik (49) enthält.

9. Fahrzeug nach Anspruch 1, **dadurch gekennzeichnet, dass** die Batterie (58) im Batteriekasten (20) über elastische Elemente (54) abgestützt ist.

## Claims

1. Electrically propelled vehicle, the battery of which is accommodated by a battery box which is arranged in the rear of the vehicle and under the floor thereof, **characterized in that**
a) the floor (4) has a cutout (11) which, in top view, is larger than the outline of the battery box (20),
b) the cutout (11) has a reinforced edge (12) to which, at the front and rear, downwardly directed supporting parts (13, 30) for the battery box (20) are fastened,
c) the rear supporting part (13) is fastened to the vehicle via a pair of flanges (17, 17') having rearwardly and downwardly sloping stop surfaces (19), and
d) the battery box (20) is rigid or reinforced.

2. Vehicle according to Claim 1, **characterized in that** the flanges (17, 17') having the sloping stop surfaces (19) of the rear supporting part (13) are connected to each other by means of shear bolts (18).

3. Vehicle according to Claim 1, **characterized in that** the supporting parts (13, 30) are fastened to the floor (4, 10) in such a manner that they can become detached from the floor panel (10) in the event of a collision.

4. Vehicle according to Claim 1, **characterized in that** the front supporting part (30) is fastened to the lower side of the reinforced edge (12) by means of tear bolts (32) and has a horizontal supporting spike (34) which is displaceable and engages in a supporting plate (35).

5. Vehicle according to Claim 4, **characterized in that** the supporting plate (35) is fastened to the floor (4) of the vehicle and is supported on the vehicle via a crumple zone (36) located in front of the supporting spike (34) in the direction of travel.

6. Vehicle according to Claim 1, **characterized in that** a cover (45) of the battery box (20) is fastened removably to the reinforced edge (12) and sits by means of its edge (46) tightly on the battery box (20).

7. Vehicle according to Claim 6, **characterized in that** the cover (45) of the battery box (20) is composed of plastic and is connected to the battery box (20) in such a manner that it becomes detached therefrom in the event of a collision.

8. Vehicle according to Claim 6, **characterized in that** the cover (45) of the battery box (20) contains the electrics and/or electronics (49) associated with the battery.

9. Vehicle according to Claim 1, **characterized in that** the battery (58) is supported in the battery box (20) via elastic elements (54).

## Revendications

1. Véhicule automobile à propulsion électrique dont la batterie est logée dans un caisson de batterie disposé à l'arrière du véhicule automobile et sous son plancher, **caractérisé en ce que** :
a) le plancher (4) est pourvu d'une échancrure (11) plus grande, en vue en élévation, que le contour du caisson de batterie (20) ;
b) l'échancrure (11) est dotée d'un bord renforcé (12) sur lequel sont fixées des parties de support (13, 30) orientées en bas vers l'avant et l'arrière pour le caisson de batterie (20) ;
c) la partie de support (13) arrière est fixée à des surfaces d'amorce (19) inclinées vers l'arrière et le bas au niveau du véhicule automobile par l'intermédiaire d'une paire de brides (17, 17') ; et
d) le caisson de batterie (20) est rigide et/ou renforcé.

2. Véhicule automobile selon la revendication 1, **caractérisé en ce que** les brides (17, 17') sont reliées entre elles avec les surfaces d'amorce (19) obliques de la partie de support (13) arrière à l'aide de boulons de cisaillement (18).

3. Véhicule automobile selon la revendication 1, **caractérisé en ce que** les parties de support (13, 30) sont reliées de telle sorte au plancher (4, 10) qu'elles peuvent se détacher de la tôle de plancher (10) en cas de choc.

4. Véhicule automobile selon la revendication 1, **caractérisé en ce que** la partie de support (30) avant est fixée au côté inférieur du bord renforcé (12) à l'aide de boulons de déchirement (32) et comporte un dôme de support (34) horizontal mobile s'emboîtant dans une tôle de support (35).

5. Véhicule automobile selon la revendication 4, **caractérisé en ce que** la tôle de support (35) est fixée au plancher (4) du véhicule automobile et s'appuie, au niveau du véhicule automobile, sur une zone déformable (36) située avant le dôme de support (34), dans la direction de conduite.

6. Véhicule automobile selon la revendication 1, **caractérisé en ce qu'**un cache (45) du caisson de batterie (20) est fixé sur le bord renforcé (12) de façon à pouvoir s'en détacher et repose de façon étanche contre le caisson de batterie (20) avec son bord (46).

7. Véhicule automobile selon la revendication 6, **caractérisé en ce que** le cache (45) du caisson de batterie (20) est en matière synthétique et est relié de telle sorte au caisson de batterie (20) qu'il peut s'en détacher en cas de choc.

8. Véhicule automobile selon la revendication 6, **caractérisé en ce que** le cache (45) contient les composants électriques et/ou électroniques (49) associés au caisson de batterie (20).

9. Véhicule automobile selon la revendication 1, **caractérisé en ce que** la batterie (58) est supportée dans le caisson de batterie (20) par des éléments élastiques (54).
